# EUROPÄISCHE PATENTSCHRIFT

(11) **EP 2 678 192 B1**
(45) Veröffentlichungstag und Bekanntmachung des Hinweises auf die Patenterteilung: **16.03.2016**
(21) Anmeldenummer: 11808229.6
(22) Anmeldetag: 28.12.2011
(51) Int. Cl.: B60R 21/0136, B60R 19/26

(54) **VERFAHREN UND VORRICHTUNG ZUR ERKENNUNG EINES AUFPRALLS AUF EINEN FRONTBEREICH EINES FAHRZEUGS**
METHOD AND SYSTEM FOR DETECTING AN IMPACT ON THE FRONT OF A VEHICLE
PROCÉDÉ ET DISPOSITIF DE DÉTECTION D'UN CHOC SUR UNE PARTIE AVANT D'UN VÉHICULE

(30) Priorität: 23.02.2011 DE 102011004608
(43) Veröffentlichungstag der Anmeldung: 01.01.2014
(73) Patentinhaber: Robert Bosch GmbH, 70442 Stuttgart (DE)
(72) Erfinder: HESSER, Christoph, 71701 Schwieberdingen (DE); LIEBAU, Martin, 71254 Ditzingen (DE); WECKMANN, Hannes, 70192 Stuttgart (DE); ROELLEKE, Michael, 71229 Leonberg-Hoefingen (DE); ELGNER, Patrick, 71634 Ludwigsburg (DE); ABAY, Temel, 70806 Kornwestheim/Pattonville (DE)
(86) Internationale Anmeldenummer: PCT/EP2011/074168
(87) Internationale Veröffentlichungsnummer: WO 2012/113482

(56) Entgegenhaltungen:
- DE-A1- 10 146 399
- DE-A1- 10 331 862
- DE-A1-102004 029 745
- DE-A1-102004 036 836
- DE-A1-102006 013 946

## Beschreibung

### Stand der Technik

Die vorliegende Erfindung bezieht sich auf ein Verfahren und ein Erfassungssystem zum Erfassen eines Aufpralls auf den Frontbereich (z.B. Stoßfänger) eines Fahrzeuges.

Durch die Einführung der neuen EU Gesetzgebung (Directive 2003/102/EC) sowie der daraus abgeleiteten GTR No. 9 (Global Technical Regulation) wird ein aktiver Fußgängerschutz im Bereich der passiven Fahrzeugsicherheit wichtiger. Beim aktiven Fußgängerschutz erkennt ein Sensorsystem den Anprall eines Fußgängers auf den Frontbereich (z.B. Stoßfänger) eines Fahrzeugs und leitet geeignete Maßnahmen ein, um die Auswirkungen auf einen aufprallenden Körper (insbes. Kopf) eines Fußgängers verletzungsmildernd entgegen zu wirken. Maßnahmen sind z.B. eine Motorhaubenaufstellung oder die Aktivierung von Airbags. Dabei sollen reduzierte Grenzwerte für den Aufprall erreicht werden. Gleichzeitig steigen die Anforderungen an die aktiven Erkennungssysteme. In bisherigen aktiven Fußgängerschutzsystemen erfolgt eine Aufprallerkennung über Sensoren, die im Bereich zwischen Stoßfängerhaut und Fahrzeugbiegequerträger angebracht sind. Dazu gehören Kontaktsensoren, wie Lichtwellenleiter oder Drucksensoren, welche auf ein Eindrücken des Stoßfängers im Bereich der Stoßfängerhaut und einer Dämpfung reagieren, sowie Beschleunigungssensoren, welche die Eindrückung (Verformung) und Schwingungen der Stoßfängerhaut zur Aufpralldetektion nutzen.

Die EP 1 792 786 A2 beschreibt ein Sensorsystem zwischen dem Stroßfängerquerträger und einem Fahrzeuglängsträger eines Fahrzeugs zur Detektion eines Aufpralls auf die Front eines Fahrzeugs.

Die DE 10 2004 036 836 A1 beschreibt ein Erfassungssystem nach dem Oberbegriff des Anspruchs 1 und einen Pralldämpfer für Fahrzeuge mit einer ersten Kraftabsorptionseinheit, einer zweiten Kraftabsorptionseinheit die eine einwirkende Kraft absorbieren kann, die oberhalb eines vorgegebenen Kraftwertes liegt, und mit einem Sensor zur Detektion einer auf den Pralldämpfer einwirkenden Kraft.

Die DE 10 331 862 A1 beschreibt ein Fahrzeugrahmenschutzelement zur Verwendung in einem Verfahren zur Ansteuerung eines Insassenschutzmittels. Das Fahrzeugrahmenschutzelement ist an einem Längs- oder Querträger eines Fahrzeugrahmens so angeordnet, dass es ab dem Einwirken einer Mindestkraft in Längsrichtung des jeweiligen Längs- bzw. Querträgers während eines Aufprallunfalls dauerhaft plastisch deformiert wird und dadurch dauerhafte Schäden vom Fahrzeugrahmen abhält.

Die DE 10 2006 013 946 A1 beschreibt eine Aufprallmessvorrichtung für Fahrzeuge mit zumindest einem mechanischen Aufprallfänger und zumindest einem Sensor zum Messen der Aufprallkräfte.

### Offenbarung der Erfindung

Vor diesem Hintergrund wird mit der vorliegenden Erfindung ein Erfassungssystem zum Erfassen eines Aufpralls auf einen Frontbereich eines Fahrzeugs, ein Fahrzeug sowie ein Verfahren zum Erfassen eines Aufpralls gemäß den Hauptansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass ein Anprall oder Anprallimpuls auf einen Stoßfänger eines Fahrzeugs über eine Längsträgerstruktur des Fahrzeugs an das Fahrzeug weitergegeben wird. Es existiert ein Kraftfluss von einer Anprallstelle über eine Dämpfungsstruktur eines Stoßfängers und dessen Trägers auf die Fahrzeuglängsträger. An Übergängen zwischen dem Stoßfänger und dem Längsträger können durch Anbringen geeigneter Sensoren Aufprallkräfte auf den Stoßfänger oder eine relative Bewegung des Stoßfängers zum Längsträger gemessen werden. Da eine Gegenkraft zum Anprall immer an den Übergängen auftritt und dies für jeden Aufprall gleichermaßen gilt, kann an den Übergängen ein Sensorsystem angebracht werden.

Der hier vorgestellte Ansatz beschreibt eine integrale Lösung zur Erkennung eines Anpralls. Hierbei wird eine durch einen Anprall auf die Längsträger einwirkende Kraft gemessen. Da bei Fahrzeugen der Stoßfänger über die Längsträger an das Fahrzeug angebunden ist, treten dort bei einem Anprall Reaktionskräfte auf. Mittels Kraftsensoren kann jeglicher Anprall erkannt und identifiziert werden.

Ein Verfahren zur Erkennung eines Aufpralls auf einen Frontbereich eines Fahrzeugs umfasst einen Schritt des Ermittelns einer Aufprallkraft oder einer Aufprallbewegung an zumindest einer Übergangsstelle zwischen einer Aufhängung eines Stoßfängers und einer tragenden Struktur des Fahrzeugs, um den Aufprall zu erkennen.

Der Frontbereich kann die Front des Fahrzeugs, beispielsweise den Stoßfänger des Fahrzeugs, umfassen. Bei dem Aufprall kann es sich um einen Fußgänger-Aufprall auf den Frontbereich handeln. Mittels des Verfahrens kann auch neben der Erkennung auch eine Klassifizierung des Aufpralls durchgeführt werden.

Die Übergangsstelle bietet eine geschützte Lage innerhalb des Fahrzeugs, an der eine oder mehrere geeignete Erfassungseinrichtungen angeordnet werden können. Somit kann die Erkennung des Aufpralls unabhängig von Umwelteinflüssen erfolgen. Bei geringer Aufprallkraft kann der Schaden an der Erfassungseinrichtung gering gehalten werden. Auch wird das Ermitteln der Aufprallkraft oder der Aufprallbewegung nicht durch eine Vorschädigung des Stoßfängers beeinflusst.

Unter einem Stoßfänger kann ein Bauteil eines Fahrzeugs verstanden werden, welches das Fahrzeug an einer Vorderseite oder einer Rückseite des Fahrzeugs begrenzt. Dadurch kann ein Stoßfänger bei einer Kollision des Fahrzeugs als erstes in Kontakt mit einem Hindernis treten. Ein Stoßfänger kann eine Stoßfängerhaut aufweisen, die gleichzeitig ein Teil einer Außenkontur des Fahrzeugs ist. Zwischen der Stoßfängerhaut und einer Stoßfänger-Aufhängung kann der Stoßfänger energieabsorbierende Strukturen oder Materialien aufweisen. Auch kann der Stoßfänger ein hinter einer Außenkontur des Fahrzeugs angeordnetes Element darstellen. Die Stoßfänger-Aufhängung kann für eine Verbindung des Stoßfängers mit einem tragenden Teil des Fahrzeugs ausgebildet sein. Die Übergangsstelle kann ein Verbindungspunkt zwischen der Aufhängung und der tragenden Struktur sein. Der tragende Teil des Fahrzeugs kann eine tragende Struktur sein. Unter einer Aufprallkraft kann ein Anteil einer Gesamtaufprallkraft verstanden werden, die durch einen Aufprall eines Objekts auf den Stoßfänger oder einen Aufprall des Stoßfängers auf das Objekt hervorgerufen werden kann. Das Objekt kann beispielsweise eine Person, ein Gegenstand oder ein anderes Fahrzeug sein. Die Größe der Aufprallkraft kann Rückschlüsse auf eine Art des Objekts zulassen. Auch kann die Aufprallkraft oder die Aufprallbewegung Rückschlüsse auf einen Kollisionspunkt, eine Kollisionsrichtung und eine Kollisionsschwere ermöglichen. Dazu können Werte der Aufprallkraft oder der Aufprallbewegung ausgewertet werden, beispielsweise indem sie mit vorbestimmten Vergleichswerten verglichen werden.

Entsprechend einer Ausführungsform kann im Schritt des Ermittelns eine erste Aufprallkraft oder eine erste Aufprallbewegung an einer ersten Übergangsstelle zwischen der Aufhängung und der tragenden Struktur des Fahrzeugs ermittelt werden. In einem zweiten Schritt des Ermittelns kann eine zweite Aufprallkraft oder eine zweite Aufprallbewegung an einer zweiten Übergangsstelle zwischen der Aufhängung und der tragenden Struktur des Fahrzeugs ermittelt werden. Dabei können die erste Übergangsstelle und die zweite Übergangsstelle voneinander beabstandet angeordnet sein. In einem Schritt des Bestimmens können aus der ersten Aufprallkraft oder der ersten Aufprallbewegung und der zweiten Aufprallkraft oder der zweiten Aufprallbewegung eine Gesamtaufprallkraft und/oder ein Aufprallvektor zur Erkennung des Aufpralls bestimmt werden. Unter einer ersten Übergangsstelle kann beispielsweise ein erster Befestigungspunkt auf einer ersten Fahrzeugseite an einer ersten Aufhängung verstanden werden. Unter einer zweiten Übergangsstelle kann ein zweiter Befestigungspunkt auf einer zweiten Fahrzeugseite an einer zweiten Aufhängung verstanden werden. Insbesondere können der erste und der zweite Befestigungspunkt symmetrisch zu einer Fahrzeuglängsachse angeordnet sein. An der ersten Übergangsstelle und an der zweiten Übergangsstelle können unterschiedliche Aufprallkräfte ermittelt werden. Dadurch kann ein Kontaktpunkt eines Objekts mit dem Stoßfänger beispielsweise über ein Verhältnis der Kräfte bestimmt werden.

In zumindest einem weiteren Schritt des Ermittelns kann eine weitere Aufprallkraft oder eine weitere Aufprallbewegung an zumindest einer weiteren Übergangsstelle zwischen der Aufhängung und der tragenden Struktur des Fahrzeugs ermittelt werden. Dabei kann die weitere Übergangsstelle von der ersten Übergangsstelle und der zweiten Übergangsstelle beabstandet angeordnet sein. Im Schritt des Bestimmens können die Gesamtaufprallkraft und/oder der Aufprallvektor ferner aus zumindest der weiteren Aufprallkraft oder der weiteren Aufprallbewegung bestimmt werden. Unter einer weiteren Übergangsstelle kann beispielsweise ein zweiter Befestigungspunkt auf einer der Fahrzeugseiten verstanden werden. Somit können an einer Aufhängung zwei Aufprallkräfte oder Aufprallbewegungen ermittelt werden. Wenn die Übergangsstellen räumlich verteilt sind, und nicht in einer Linie angeordnet sind, kann über Verhältnisse der ermittelten Aufprallkräfte ein räumlicher Kraftvektor bestimmt werden. Dadurch kann die Art des Aufpralls charakterisiert werden.

Eine Vorrichtung zur Erkennung eines Aufpralls auf einen Frontbereich eines Fahrzeugs umfasst eine Einrichtung zum Ermitteln einer Aufprallkraft oder einer Aufprallbewegung an zumindest einer Übergangsstelle zwischen einer Aufhängung eines Stoßfängers und einer tragenden Struktur des Fahrzeugs, um den Aufprall zu erkennen. Eine Einrichtung zum Ermitteln kann ein Kraft/Weg Sensor, beispielsweise ein Kraftaufnehmer, oder ein optischer Wegschalter sein. Ebenso kann die Einrichtung ein Bewegungsaufnehmer sein oder einen Beschleunigungssensor umfassen.

Die Einrichtung zum Ermitteln kann ausgebildet sein, die Aufprallkraft zumindest teilweise zwischen der Aufhängung und der tragenden Struktur zu übertragen. Somit kann die Einrichtung zum Ermitteln ein Verbindungselement mit Messfunktionalität zwischen der Stoßfängeraufhängung und der tragenden Struktur sein. Dadurch kann das Ermitteln direkt und unmittelbar erfolgen.

Auch kann die Vorrichtung zumindest ein federelastisches Element umfassen, das durch die Aufprallkraft auslenkbar ist. Dabei kann die Einrichtung zum Ermitteln ausgebildet sein, um eine Auslenkung des federelastischen Elements oder eine mechanische Spannung im federelastischen Element zu ermitteln, die jeweils eine Größe der Anprallkraft oder Aufprallbewegung repräsentieren. Ein federelastisches Element kann beispielsweise eine Feder mit bekannter Kennlinie sein, die unter der Aufprallkraft verformbar ist. Ein Maß einer Verformung kann in direktem Zusammenhang mit der Aufprallkraft stehen. Ebenso kann das federelastische Element beispielsweise ein Biegebalken mit bekannter Steifigkeit sein. Dann kann ein Maß einer Spannungsänderung unter der Aufprallkraft in direktem Zusammenhang zu der Aufprallkraft stehen.

Auch kann die Vorrichtung zumindest einen Beschleunigungsaufnehmer umfassen, der zumindest eine Erfassungsrichtung in einer Richtung der Aufprallkraft aufweist. Dabei kann die Einrichtung zum Ermitteln ausgebildet sein, um basierend auf einer erfassten Beschleunigung die Aufprallkraft oder die Aufprallbewegung zu ermitteln. Ein Beschleunigungsaufnehmer kann beispielsweise eine, an einem beweglichen Bauteil federnd gelagerte Masse sein. Aufgrund einer Trägheit der Masse kann die Masse bei einer Aufprallbewegung eine, der Aufprallbewegung entgegengesetzte Kraft auf die Feder ausüben. Eine Größe der Kraft kann ein Maß für eine wirkende Beschleunigung sein. Dadurch kann die Aufprallkraft und/oder die Aufprallbewegung einfach und sicher erkannt werden.

In einer zusätzlichen Ausführungsform umfasst die Vorrichtung eine Dämpfungskammer, zum Dämpfen der Aufprallkraft, wobei die Einrichtung zum Ermitteln ausgebildet ist, um einen Druck in der Dämpfungskammer zu erfassen, wobei eine Höhe des Drucks eine Größe der Anprallkraft oder Aufprallbewegung repräsentiert. Unter einer Dämpfungskammer kann eine Einrichtung verstanden werden, die eine durch die Anprallkraft oder Anprallbewegung repräsentierte Anprallenergie zumindest teilweise aufnehmen und/oder ableiten kann. Beispielsweise kann die Dämpfungskammer mit einem Fluid gefüllt sein, das unter Einwirkung der Aufprallkraft oder Aufprallbewegung unter Druck aus der Dämpfungskammer entweichen kann und dabei die Aufprallenergie in eine andere Energieform umwandelt. Dabei kann der Druck mit einem Druckaufnehmer erfasst werden.

Ein Verfahren zum Auswerten einer Information über einen Aufprall auf einen Frontbereich eines Fahrzeugs umfasst einen Schritt des Empfangens einer Information über zumindest eine Aufprallkraft oder eine Aufprallbewegung mittels zumindest einer Schnittstelle zu zumindest einer Vorrichtung zur Erkennung des Aufpralls auf einen Stoßfänger des Fahrzeugs, und mit einem Schritt des Bestimmens einer Gesamtaufprallkraft oder eines Aufprallvektors des Aufpralls unter Verwendung der Information.

Eine Vorrichtung zum Auswerten einer Information über einen Aufprall auf einen Stoßfänger eines Fahrzeugs ist ausgebildet ist, um die Schritte des Verfahrens zum Auswerten einer Information über einen Aufprall auf einen Stoßfänger eines Fahrzeugs in entsprechenden Einrichtungen durchzuführen bzw. umzusetzen.

Unter einer Vorrichtung zum Auswerten einer Information über einen Aufprall auf einen Stoßfänger eines Fahrzeugs kann vorliegend ein elektrisches Gerät verstanden werden, das Sensorsignale verarbeitet und in Abhängigkeit davon Steuersignale ausgibt. Die Vorrichtung zum Auswerten einer Information über einen Aufprall auf einen Stoßfänger eines Fahrzeugs kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung zum Auswerten einer Information über einen Aufprall auf einen Stoßfänger eines Fahrzeugs beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Ein Erfassungssystem zum Erfassen eines Aufpralls auf einen Frontbereich eines Fahrzeugs umfasst die folgenden Merkmale:
eine tragende Struktur des Fahrzeugs, die ausgebildet ist, um eine Aufprallkraft zu absorbieren;
eine Aufhängung eines Stoßfängers, die mit dem Stoßfänger verbunden ist, und ausgebildet ist, um die Aufprallkraft zumindest teilweise von dem Stoßfänger auf die tragende Struktur zu übertragen; und
eine genannte Vorrichtung zur Erkennung des Aufpralls auf den Stoßfänger des Fahrzeugs, wobei die Vorrichtung an einer Übergangsstelle zwischen der Stoßfänger-Aufhängung und der tragenden Struktur angeordnet ist.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem, einem Computer entsprechenden Gerät ausgeführt wird.

Die Erfindung wird nachstehend anhand der beigefügten Zeichnungen beispielhaft näher erläutert. Es zeigen:
- Fig. 1: ein Ablaufdiagramm eines Verfahren zur Erkennung eines Aufpralls auf einen Stoßfänger eines Fahrzeugs;
- Fig. 2: ein Blockschaltbild einer Vorrichtung zur Erkennung eines Aufpralls auf einen Stoßfänger eines Fahrzeugs;
- Fig. 3: eine Darstellung eines Erfassungssystems zum Erfassen eines Aufpralls auf einen Stoßfänger eines Fahrzeugs; und
- Fig. 4: eine Darstellung eines Erfassungssystems zum Erfassen eines Aufpralls auf einen Stoßfänger eines Fahrzeugs als Ausführungsbeispiel der vorliegenden Erfindung.

In der nachfolgenden Beschreibung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

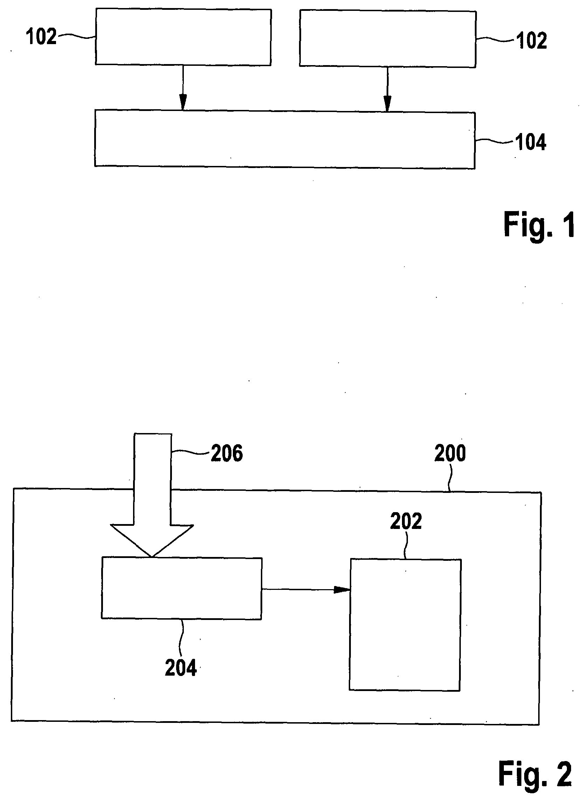

Fig. 1 zeigt ein Ablaufdiagramm eines Verfahrens zur Erkennung eines Aufpralls auf einen Stoßfänger eines Fahrzeugs. Wenn ein Objekt, beispielsweise ein Fußgänger auf den Stoßfänger trifft, so bewirkt der Aufprall eine Gesamtaufprallkraft. Die Gesamtaufprallkraft verteilt sich anteilig auf, wie in diesem Ausführungsbeispiel, zwei Befestigungspunkte des Stoßfängers. Aus einer Entfernung zu dem einen ersten der Befestigungspunkte und einer Entfernung zu dem zweiten der Befestigungspunkte ergeben sich je eine Richtung und je ein Betrag am ersten und am zweiten Befestigungspunkt. Dort wird in einem Schritt 102 eine erste Aufprallkraft gemessen, die einen ersten Anteil der Gesamtaufprallkraft darstellt. In einem zweiten Schritt 102 wird eine zweite Aufprallkraft gemessen, die einen zweiten Anteil der Gesamtaufprallkraft darstellt. Die Schritte 102 können zeitlich parallel ausgeführt werden. In einem Schritt 104 wird aus einer Information über die erste Aufprallkraft und die zweite Aufprallkraft eine Information über die Gesamtaufprallkraft ermittelt. Zudem kann basierend auf der ersten Aufprallkraft und der zweiten Aufprallkraft ein Aufprallort bestimmt werden. Dabei können die Entfernungen zwischen dem Aufprallort und den Befestigungspunkten mittels der Hebelgesetze bestimmt werden. Aufgrund der Bestimmung des Aufprallorts und der Bestimmung der Gesamtaufprallkraft im Schritt 104 können am Fahrzeug aktive Schutzmaßnahmen aktiviert werden, die im Falle eines Fußgängeraufpralls ein Verletzungsrisiko und eine Verletzungsschwere für den Fußgänger mindern können.

Alternativ oder zusätzlich können in den Schritten 102 eine erste und eine zweite Aufprallbewegung erfasst werden. Die erste und die zweite Aufprallbewegung kennzeichnen Verschiebungen der Befestigungspunkte aufgrund des Aufpralls. Aus der ersten und der zweiten Aufprallbewegung können in dem Schritt eine Gesamtaufprallbewegung, eine Gesamtaufprallkraft sowie der Aufprallort bestimmt werden. In weiteren Schritten 102 können weitere Aufprallkräfte oder Aufprallbewegungen an weiteren Befestigungspunkten erfasst werden und im Schritt 104 weiterverarbeitet werden.

Fig. 2 zeigt ein Blockschaltbild einer Vorrichtung 200 zur Erkennung eines Aufpralls auf einen Stoßfänger eines Fahrzeugs. Die Vorrichtung kann an einer Übergangsstelle zwischen dem Stoßfänger und einer tragenden Struktur des Fahrzeugs angeordnet sein. Die Vorrichtung 200 weist eine Einrichtung 202 zum Ermitteln einer Aufprallkraft oder einer Aufprallbewegung und ein federelastisches Element 204 auf. Eine Kraft 206 oder Bewegung 206 wirkt auf das federelastische Element 204 und bewirkt eine Auslenkung des federelastischen Elements 204 in eine Wirkrichtung der Kraft 206 oder Bewegung 206. Die Auslenkung steht in direktem Zusammenhang mit einer Größe der Kraft 206 oder Bewegung 206. Eine Federkennlinie des federelastischen Elements 204 stellt diesen Zusammenhang dar. Die Federkennlinie kann linear oder nichtlinear sein. Eine nichtlineare Kennlinie kann degressive oder progressive Federsteifigkeit abbilden. Die Auslenkung bewirkt im Inneren des federelastischen Elements 204 innere Spannungen. Durch Streckung des Materials auf einer kraftzugewandten Seite wird die Materialspannung im Falle einer positiven Kraft erhöht, durch Stauchung des Materials auf einer kraftabgewandten Seite wird die Materialspannung im Falle einer positiven Kraft verringert. Die Einrichtung 202 ermittelt die Auslenkung oder die Materialspannung, um ein Maß für die Anprallkraft oder Anprallbewegung zu erhalten. Dazu kann in der Vorrichtung 200 beispielsweise ein Hall-Sensor angeordnet sein, der eine Veränderung eines Magnetfeldes durch die Auslenkung eines ferromagnetischen, federelastischen Elements 204 erfasst. Ebenso kann in der Vorrichtung 200 zumindest ein Dehnmessstreifen auf dem federelastischen Element 204 angeordnet sein, der eine Dehnung oder Stauchung des federelastischen Elements 204 erfasst.

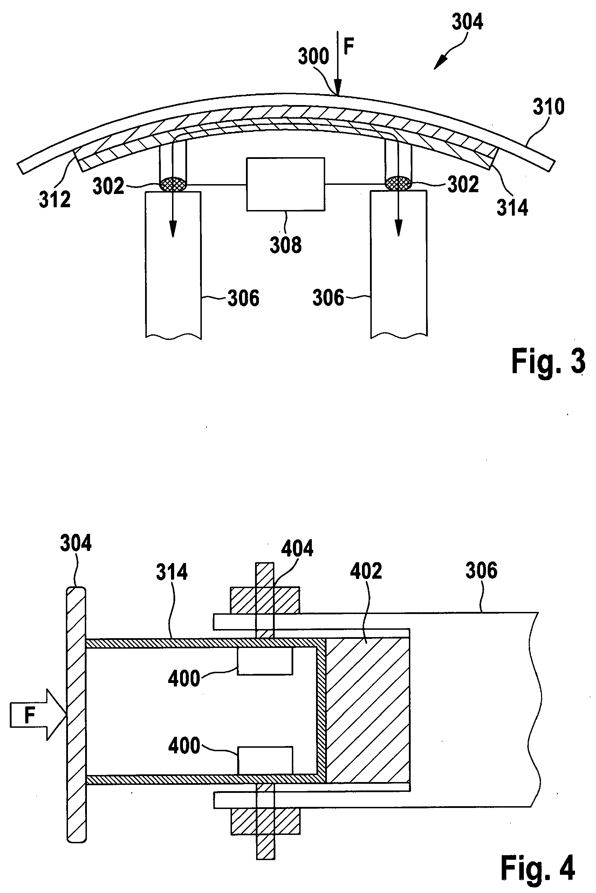

Fig. 3 zeigt eine Darstellung eines Erfassungssystems zum Erfassen eines Aufpralls auf einen Stoßfänger eines Fahrzeugs. Die Darstellung zeigt einen Stoßfängeraufbau und einen möglichen Kraftfluss bei einem Aufprall 300, beispielsweise einem eines Fußgängeraufpralls, auf eine Frontstruktur eines Fahrzeugs. Für eine Erkennung des Aufpralls 300 mittels Kraftsensoren kann eine Erfassung einer Aufprallkraft F an Befestigungspunkten 302 des Stoßfängers 304 an einer tragenden Struktur 306 des Fahrzeugs erfolgen. Die tragende Struktur 306 umfasst zwei Längsträger des Fahrzeugs. Der Aufprall 300 erfolgt an einer Stoßfängeraußenhaut 310. Über einen Dämpfer 312 aus energieabsorbierendem Material wird die Aufprallkraft an eine Trägerstruktur 314 des Stoßfängers 304 weitergeleitet. Die Trägerstruktur 314 umfasst zwei Aufhängeelemente, die sich auf Höhe der Längsträger 306 in Richtung der Längsträger 306 erstrecken. Die Aufhängeelemente sind an den Befestigungspunkten 302 mit der tragenden Struktur 306 des Fahrzeugs verbunden.

Innerhalb der versteiften Trägerstruktur 314 teilt sich der Kraftfluss entsprechend einem Verhältnis von einem Abstand zwischen dem Aufprallort 300 und einem ersten Befestigungspunkt 302 und einem Abstand zwischen dem Aufprallort 300 und einem zweiten Befestigungspunkt 302. Die Teilkräfte wirken entlang der Befestigung des Stoßfängers 304 über eine Übertragungsstruktur der Befestigungspunkte 302 auf die Längsträgerstruktur 306 des Fahrzeugs. Die Befestigungspunkte 302 umfassen somit jeweils eine Übergangsstruktur zwischen Stoßfänger 304 und der tragenden Struktur 306 des Fahrzeugs und bilden einen Einbauort einer Vorrichtung zum Erkennen des Aufpralls. Bei der Vorrichtung zum Erkennen kann es sich um einen geeigneten Sensor, beispielsweise einen Kraftsensor, handeln. Mittels der Vorrichtungen zum Erfassen wird je ein Teil des durch den Aufprall hervorgerufenen Kraftflusses erfasst, der auf die tragende Struktur 306 übertragen wird. Ermittelte Werte des Kraftflusses werden an eine Auswerteeinheit 308 weitergegeben. Die Auswerteeinheit 308 kann an einer geeigneten Position im Fahrzeug angeordnet und über geeignete Schnittstellen, beispielsweise elektrische Leitungen, mit den Vorrichtungen zum Erkennen des Aufpralls verbunden sein. Aufgrund einer Einordnung der ermittelten Aufprallkraft können daraufhin aktive Sicherheitssysteme des Fahrzeugs ausgelöst werden, um Unfallfolgen für den Fußgänger zu verringern.

Gemäß einem Ausführungsbeispiel kann eine integrale Erkennung aller Anprallereignisse, inklusive schwerer Crashs, über die gesamte Breite des Stoßfängers 304 erreicht werden. Die Sensoren, gemäß diesem Ausführungsbeispiel Kraftsensoren als Vorrichtungen zum Erkennen, sind an einer geschützten Sensorposition, insbesondere nicht direkt an der Stoßfängerhaut 310, angeordnet. Dadurch entsteht bei Anprallcrashs mit Geschwindigkeiten bis zu 10 km/h kein oder nur ein geringer Schaden am Sensorsystem. Sollte der Stoßfänger 304 bereits Schäden aufweisen, so kann durch eine Unabhängigkeit vom Zustand des Stoßfängers weiterhin die Aufprallkraft F ermittelt werden. Sollte das Anprallereigniss 300 in einer Randzone der Fahrzeugfront passieren, kann es durch eine Rotationsbewegung des Stoßfängers 304 über das Vorzeichen im Kraftfluss erkannt werden. Dann würde an einem Kraftsensor ein Zug gemessen werden, und am anderen Sensor ein Druck.

Fig. 4 zeigt eine weitere Darstellung eines Erfassungssystems zum Erfassen eines Aufpralls auf einen Stoßfänger eines Fahrzeugs als weiteres Ausführungsbeispiel der vorliegenden Erfindung. Ein üblicherweise zur Gewichtssensierung verwendeter iBolt-Sensor 400 kann zur Kraftflussmessung als Befestigungselement zwischen Stossfänger 304 und Längsträger 306 des Fahrzeugs eingebaut werden. Anstelle des iBolt-Sensors können auch andere Sensorsysteme mit ähnlichem Aufbau und Messprinzip verwendet werden. Der Sensor 400 übernimmt bei diesem Einsatz zwei Funktionen. Erstens eine Befestigung des Stoßfängers an den Längsträgern 306, und zweitens eine Bestimmung zumindest eines Anteils der Aufprallkraft F durch Messung der Scherkräfte an der Befestigungsstelle des Sensors 400.

Gemäß diesem Ausführungsbeispiel werden vier Sensoren 400 eingesetzt. Davon sind jeweils zwei an einem rechten Längsträger und jeweils zwei an einem linken Längsträger 306 des Fahrzeugs befestigt. Dabei kann ein Sensor 400 jeweils an einer Oberseite des Längsträgers 306 und ein Sensor 400 jeweils an einer Unterseite des Längsträgers 306 angeordnet sein. In Fig. 4 ist einer der Längsträger 306 gezeigt. Ein Endabschnitt der Stoßfängerstruktur 314 wird von einem Endabschnitt des Längsträgers 306 aufgenommen. Die Sensoren 400 sind in einem Überlappungsbereich zwischen den Endabschnitten der Stoßfängerstruktur und des Längsträgers 306 angeordnet.

Durch Vergleich der Sensorsignale der vier Sensoren 400 kann die Anprallposition rechts, Mitte, links des Anprallobjektes auf den Stoßfänger 304 bestimmt werden. Eine Erfassung ist alternativ auch mit nur zwei Sensoren 400 möglich, von denen beispielsweise einer an dem rechten und einer an dem linken Längsträger 306 angeordnet ist.

Gemäß dem in Fig. 4 gezeigten Ausführungsbeispiel befestigt der Sensor 400 über eine Schraubverbindung 404 die Stoßfängerstruktur 314 am Längsträger 306. Die Stoßfängerstruktur 314 ist innerhalb des Längsträgers 306 geführt. Wenn eine Aufprallkraft F am Stoßfänger 304 wirkt, dann wird die Kraft F durch die Stoßfängerstruktur bis zu den Sensorbolzen 400 übertragen. Dort wirken dann Scherkräfte, die der Sensor 400 erfasst. Die Längsträger 306 absorbieren die eingeleitete Kraft F. Dämpfer 402 reduzieren durch einen gezielten Energieabbau eine Belastung für Fußgänger und tragenden Struktur.

Beispielsweise kann, wie in Fig. 4 dargestellt, ein Hohlraum als Dämpfer 402 mit Drucksensoranschluß die Kraft F und eine durch die Kraft F hervorgerufene Bewegung erfassen. Optional kann ein Beschleunigungssensor oder ein optischer Wegschalter an der Übergangsstelle zwischen Stoßfänger und tragender Struktur eingesetzt werden, da dies eine einfache und geschützte Anbringung des Sensorsystems ermöglicht. Zusätzlich liegt der Sensor 400 im direkten Kraftfluss zwischen Stoßfänger 304 und Längsträger 306 und ist damit optisch gut überprüfbar. Für eine Auswertung können beispielsweise Grenzwerte für eine Sensorerkennung gemäß EEVC upper legform (EEVC= European Enhanced Vehicle-safety Committee) gelten, mit 40 km/h als Aufprallgeschwindigkeits-Grenzwert und einem Krafteintrag F < 7,5 kN.

Die in den Figuren 3 und 4 gezeigten Ausführungsbeispiele basieren auf einer Erfassung des Aufpralls mit vier Sensoren 400. Je zwei Sensoren 400 sind links/rechts am Längsträger 306 verteilt, dabei erfolgt eine Befestigung jeweils oben/unten. In Fig. 3 ist die Anordnung als Draufsicht und in Fig. 4 als Seitenansicht gezeigt. Dabei kann der Kraftsensor 400 beliebig ausgeführt werden. Er soll die Befestigungsanforderungen für die Stoßfängerstruktur 314 erfüllen.

Erfindungsgemäße Verfahrensschritte können wiederholt sowie in einer anderen als in der beschriebenen Reihenfolge ausgeführt werden.

## Patentansprüche

1. Erfassungssystem zum Erfassen eines Aufpralls (300) auf einen Frontbereich eines Fahrzeugs, mit folgenden Merkmalen:
einer tragenden Struktur (306) des Fahrzeugs, die ausgebildet ist, um eine Aufprallkraft (F) zu absorbieren;
einer Aufhängung (314) eines Stoßfängers (304), die mit dem Stoßfänger verbunden ist, und ausgebildet ist, um die Aufprallkraft zumindest teilweise von dem Stoßfänger auf die tragende Struktur zu übertragen, wobei ein Endabschnitt der Aufhängung (314) von einem Endabschnitt der tragenden Struktur (306) aufgenommen ist; und
zumindest einem Sensor (400), **dadurch gekennzeichnet, dass** der Sensor in einem Überlappungsbereich zwischen den Endabschnitten der Aufhängung (314) und der tragenden Struktur (306) angeordnet ist, und ausgebildet ist, um die Aufhängung (314) an der tragenden Struktur (306) zu befestigen und zur Erkennung des Aufpralls auf den Stoßfänger des Fahrzeugs zumindest einen Anteil der Aufprallkraft (F) durch Messung von Scherkräften an einer Befestigungsstelle des zumindest einen Sensors (400) zu bestimmen.

2. Erfassungssystem gemäß Anspruch 1, bei dem die tragende Struktur (306) ein Längsträger des Fahrzeugs ist und der zumindest eine Sensor (400) an der Oberseite des Längsträgers oder der Unterseite des Längsträgers angeordnet ist.

3. Erfassungssystem gemäß einem der vorangegangenen Ansprüche, wobei der zumindest eine Sensor (400) als ein Sensorbolzen (400) ausgeführt und ausgebildet ist, um die die Aufhängung (314) über eine Schraubverbindung (404) an der tragenden Struktur (306) zu befestigen.

4. Erfassungssystem gemäß einem der vorangegangenen Ansprüche, mit einer Dämpfungskammer (402), zum Dämpfen der Aufprallkraft (F) und einem Druckaufnehmer, der ausgebildet ist, um einen Druck in der Dämpfungskammer (402) zu erfassen, wobei eine Höhe des Drucks eine Größe der Anprallkraft (F) repräsentiert.

5. Fahrzeug mit einem Erfassungssystem gemäß einem der vorangegangenen Ansprüche.

6. Verfahren zum Erfassen eines Aufpralls (300) auf einen Frontbereich eines Fahrzeugs, das eine tragende Struktur (306), die ausgebildet ist, um eine Aufprallkraft (F) zu absorbieren, eine Aufhängung (314) eines Stoßfängers (304), die mit dem Stoßfänger verbunden ist, und ausgebildet ist, um die Aufprallkraft zumindest teilweise von dem Stoßfänger auf die tragende Struktur zu übertragen, wobei ein Endabschnitt der Aufhängung (314) von einem Endabschnitt der tragenden Struktur (306) aufgenommen ist, und zumindest einen Sensor (400) aufweist, der in einem Überlappungsbereich zwischen den Endabschnitten der Aufhängung (314) und der tragenden Struktur (306) angeordnet ist, und ausgebildet ist, um die Aufhängung (314) an der tragenden Struktur (306) zu befestigen, wobei das Verfahren den folgenden Schritt umfasst:
Messen von Scherkräften an einer Befestigungsstelle des zumindest einen Sensors (400), um zur Erkennung des Aufpralls auf den Stoßfänger des Fahrzeugs zumindest einen Anteil der Aufprallkraft (F) zu bestimmen.

## Claims

1. Detection system for detecting an impact (300) on a front area of a vehicle, having the following features:
a load-bearing structure (306) of the vehicle, which load-bearing structure (306) is designed to absorb an impact force (F);
a suspension means (314) for a bumper (304), which suspension means (314) is connected to the bumper and is designed to transmit the impact force at least partially from the bumper to the load-bearing structure, wherein an end section of the suspension means (314) is held by an end section of the load-bearing structure (306); and
at least one sensor (400), **characterized in that** the sensor is arranged in an overlapping area between the end sections of the suspension means (314) and the load-bearing structure (306) and is designed to attach the suspension means (314) to the load-bearing structure (306) and to determine, for the purpose of detecting the impact on the bumper of the vehicle, at least one portion of the impact force (F) by measuring shearing forces at an attachment point of the at least one sensor (400).

2. Detection system according to Claim 1, in which the load-bearing structure (306) is a longitudinal carrier of the vehicle, and the at least one sensor (400) is arranged on the upper side of the longitudinal carrier or the underside of the longitudinal carrier.

3. Detection system according to one of the preceding claims, wherein the at least one sensor (400) is embodied as a sensor bolt (400) and is designed to attach the suspension means (314) to the load-bearing structure (306) via a screw-type connection (404).

4. Detection system according to one of the preceding claims, having a damping chamber (402) for damping the impact force (F) and a pressure pickup which is designed to detect a pressure in the damping chamber (402), wherein the level of the pressure represents a magnitude of the impact force (F).

5. Vehicle having a detection system according to one of the preceding claims.

6. Method for detecting an impact (300) on a front area of a vehicle which has a load-bearing structure (306) which is designed to absorb an impact force (F), a suspension means (314) of a bumper (304) which is connected to the bumper and is designed to transmit the impact force at least partially from the bumper to the load-bearing structure, wherein an end section of the suspension means (314) is held by an end section of the load-bearing structure (306), and at least one sensor (400) which is arranged in an overlapping area between the end sections of the suspension means (304) and the load-bearing structure (306) and is designed to attach the suspension means (314) to the load-bearing structure (306), wherein the method comprises the following step:
measuring shearing forces at an attachment point of the at least one sensor (400) in order to determine at least a portion of the impact force (F), in order to detect the impact on the bumper of the vehicle.

## Revendications

1. Système de détection pour la détection d'un choc (300) sur une partie avant d'un véhicule, présentant les caractéristiques suivantes:
une structure portante (306) du véhicule, qui est conçue pour absorber une force d'impact (F);
une suspension (314) d'un pare-chocs (304), qui est reliée au pare-chocs et qui est conçue pour transmettre au moins en partie la force d'impact du pare-chocs à la structure portante, dans lequel une partie d'extrémité de la suspension (314) est contenue dans une partie d'extrémité de la structure portante (306); et
au moins un capteur (400),
**caractérisé en ce que** le capteur est disposé dans une zone de chevauchement entre les parties d'extrémité de la suspension (314) et de la structure portante (306), et est conçu pour fixer la suspension (314) à la structure portante (306) et pour déterminer au moins une fraction de la force d'impact (F) par la mesure de forces de cisaillement à un point de fixation dudit au moins un capteur (400), en vue de l'identification du choc sur le pare-chocs du véhicule.

2. Système de détection selon la revendication 1, dans lequel la structure portante (306) est un longeron du véhicule et ledit au moins un capteur (400) est disposé sur le côté supérieur du longeron ou sur le côté inférieur du longeron.

3. Système de détection selon l'une quelconque des revendications précédentes, dans lequel ledit au moins un capteur (400) est réalisé en forme de boulon de capteur (400) et est conçu pour fixer la suspension (314) à la structure portante (306) au moyen d'un assemblage vissé (404).

4. Système de détection selon l'une quelconque des revendications précédentes, avec une chambre d'amortissement (402), destinée à amortir la force d'impact (F), et un enregistreur de pression, qui est conçu pour détecter une pression dans la chambre d'amortissement (402), dans lequel une hauteur de la pression représente une grandeur de la force d'impact (F).

5. Véhicule avec un système de détection selon l'une quelconque des revendications précédentes.

6. Procédé de détection d'un choc (300) sur une partie avant d'un véhicule, qui présente une structure portante (306), qui est conçue pour absorber une force d'impact (F), une suspension (314) d'un pare-chocs (304), qui est reliée au pare-chocs et qui est conçue pour transmettre la force d'impact au moins en partie du pare-chocs à la structure portante, dans lequel une partie d'extrémité de la suspension (314) est contenue dans une partie d'extrémité de la structure portante (306), et au moins un capteur (400), qui est disposé dans une zone de chevauchement entre les parties d'extrémité de la suspension (314) et de la structure portante (306), et qui est conçu pour fixer la suspension (314) à la structure portante (306), dans lequel le procédé comprend l'étape suivante:
mesurer des forces de cisaillement à un point de fixation dudit au moins un capteur (400), afin de déterminer au moins une fraction de la force d'impact (F) en vue d'identifier le choc sur le pare-chocs du véhicule.
